# EUROPEAN PATENT APPLICATION

(11) **EP 4 822 811 A1**
(43) Date of publication of application: **14.10.2026**
(21) Application number: 25382361.1
(22) Date of filing: 08.04.2025
(51) Int. Cl.: H01M 10/42, H01M 10/48, H01M 50/116, H01M 50/121

(54) **ELECTROCHEMICAL CELL AND PLATFORM FOR PERFORMING ELECTROCHEMICAL EXPERIMENTS SIMULTANEOUSLY**

(71) Applicant: Fundación IMDEA Energía, 28935 Móstoles (Madrid) (ES)
(72) Inventor: ROSAS CERVANTES, Vinicio, E-28935 Móstoles, Madrid (ES); ROIG GARCÍA, Carlos, E-28935 Móstoles, Madrid (ES); ESTEBAN RUBIO, Héctor, E-28935 Móstoles, Madrid (ES); CALLE GIL, Raúl, E-28935 Móstoles, Madrid (ES); ORTEGA RODRÍGUEZ, Manuel, E-28935 Móstoles, Madrid (ES); ECHEVERRI MUÑOZ, Marcelo, E-28935 Móstoles, Madrid (ES); COLLADO BRUNETE, Laura, E-28935 Móstoles, Madrid (ES); GARCÍA TECEDOR, Miguel, E-28935 Móstoles, Madrid (ES); DE LA PEÑA O'SHEA, Víctor Antonio, Víctor Antonio Móstoles, Madrid (ES)
(74) Representative: ABG Intellectual Property Law, S.L.

(57) **Abstract**

The present invention belongs to the field of electrochemical cells in the area of research and development of new materials and coatings and the use thereof in chemical reactions. In particular, the invention relates to an electrochemical cell that can be used for electrochemical and/or photoelectrochemical applications. The cell is scalable for multiple and simultaneous application in laboratories, which can be stand-alone laboratories, for example, for performing electrochemical and/or photoelectrochemical studies on thin films. Furthermore, the invention relates to a platform configured to perform multiple experiments simultaneously in a plurality of electrochemical cells. The invention also relates to a method for training a machine learning algorithm to characterise working electrodes during electrochemical experiments in electrochemical cells.

## Description

### OBJECT OF THE INVENTION

The present invention belongs to the field of electrochemical cells in the area of research and development of new materials and coatings and the use thereof in chemical reactions. In particular, the invention relates to an electrochemical cell that can be used for electrochemical and/or photoelectrochemical applications. The cell is scalable for multiple and simultaneous application in laboratories, which can be stand-alone laboratories, for example, for performing electrochemical and/or photoelectrochemical studies on thin films.

Furthermore, the invention relates to a platform configured to perform multiple experiments simultaneously in a plurality of electrochemical cells. The invention also relates to a method for training a machine learning algorithm to characterise working electrodes during electrochemical experiments in electrochemical cells.

### BACKGROUND OF THE INVENTION

The arrival of 3D printed electrochemical cells marked an important milestone in the field of electrochemistry and materials science. 3D-printed electrochemical cells represent an innovative integration of electrochemistry and additive manufacturing.

The evolution of 3D-printed electrochemical cells has been substantially transformative, from cell designs with simple electrodes to complex multilayer structures. Today, 3D-printed electrochemical cells are used in various, high-impact applications. These applications range from energy storage solutions, such as batteries and supercapacitors, to biomedical applications such as biosensors and implant coatings. However, despite recent advances in electrochemical cells, major challenges remain to be solved.

Furthermore, a large number of experimental variables must be evaluated in the development of devices and materials for electrochemical applications, such as in the production of sustainable fuels or batteries, among others. Conventional research techniques lack an efficient system that allows preparation and simultaneous tests to be performed in multiple electrochemical cells, representing a limitation in rapid condition optimisation and new material development.

The present invention proposes a new electrochemical cell configuration for electrochemical and/or photoelectrochemical processes which allows it to be scalable for multiple and simultaneous application in laboratories. The present invention also proposes a platform for performing simultaneous tests in multiple electrochemical cells and a method for training a machine learning algorithm for the characterisation of working electrodes.

### DESCRIPTION OF THE INVENTION

The present invention proposes an electrochemical cell according to claim 1, a platform for performing a plurality of electrochemical experiments simultaneously according to claim 13, and a method for training a machine learning algorithm for the characterisation of working electrodes according to claim 15. The dependent claims define preferred embodiments of the invention.

In a first inventive aspect, the present invention provides an electrochemical cell comprising:
- a main body comprising:
   ∘ a first cavity configured to receive an electrolyte;
   ∘ a second cavity configured to at least partially house a working electrode, the second cavity being in fluid communication with the first cavity;
   ∘ a first opening configured to receive a reference electrode and a second opening configured to receive a counter electrode, the first opening and the second opening being in fluid communication with the first cavity;
- a movable part connected to the main body; and
- an electrically conductive element arranged in the movable part;
wherein the movable part is configured to move between a first contact position in which the electrically conductive element is in contact with the working electrode when the working electrode is housed in the second cavity and a second non-contact position between the electrically conductive element and the working electrode.

The electrochemical cell of the present invention is suitable for carrying out electrochemical measurement processes and/or photoelectrochemical measurement processes.

The present electrochemical cell comprises a main body, a movable part connected to said main body, and an electrically conductive element arranged in the movable part.

The main body comprises two cavities, particularly a first cavity and a second cavity. The first cavity is intended to receive therein an electrolyte, capable of ionising and allowing ion flow; the second cavity is intended to at least partially house therein a working electrode. The second cavity is in fluid communication with the inside of the first cavity, such that the electrolyte is also housed in the second cavity, thereby reaching the working electrode when it is housed in the second cavity. That is, the main body comprises therein a chamber divided into two cavities or sections communicating with one another, for example, by means of a channel, so that the electrolyte is distributed between both cavities. At least the second cavity is open towards the outside of the main body. In one embodiment, the second cavity is open towards an upper surface of the main body.

The main body comprises two openings, i.e., a first opening and a second opening. These openings are intended to each receive an electrode therein and are furthermore in communication with the inside of the first cavity, that is, these openings are arranged from one surface of the main body until reaching the first cavity. In one embodiment, the first opening and the second opening are open towards a surface of the main body opposite the surface towards which the second cavity opens. In one embodiment, the second cavity is open towards an upper surface of the main body and the openings for the electrode are open towards a lower surface of the main body.

The first opening is configured to receive a reference electrode and the second opening is configured to receive a counter electrode. Reference electrode is understood to be an electrode with a known standard potential that allows referencing the electrochemical measurement, i.e., the reference electrode is the electrode against which the measurements taken in other electrodes will be compared and comprises a predefined standard potential. Counter electrode is understood to be an electrode configured to allow the passage of current and in which electrochemical counter-reaction is carried out. The electrochemical cell is furthermore configured to receive a working electrode in its second cavity, wherein this working electrode corresponds to the electrode in which the electrochemical or photoelectrochemical reaction occurs. Photoelectrochemical reaction will be understood to be a light-mediated electrochemical reaction.

The movable part is connected to the main body of the cell and configured to move between two positions: a first contact position in which an electrically conductive element arranged on the movable part is in contact with the working electrode when the latter is housed in the second cavity; and a second non-contact position between the electrically conductive element and the working electrode. The first contact position will be understood to be that position in which at least part of the movable part and/or of the electrically conductive element is located closest to the second cavity of the main body; and the second contact position will be understood to be that position in which at least part of the movable part and/or of the electrically conductive element is located farthest away from the second cavity. That is, in the first contact position at least part of the movable part and/or of the electrically conductive element is located closer to the second cavity compared to the second non-contact position in which said at least part of the movable part and/or of the electrically conductive element is located farthest away from the second cavity.

The electrically conductive element is arranged in the movable part and configured to be in electrical contact with the working electrode when the working electrode is at least partially housed in the second cavity of the cell and the movable part is in the first contact position. In one embodiment, the electrically conductive element is configured to electrically contact a voltage meter and/or generator. In one embodiment, the electrically conductive element is configured to electrically contact a current meter and/or generator. When the movable part is in the first contact position, the working electrode comes into electrical contact with said voltage and/or current meter and/or generator through said electrically conductive element arranged in the movable part. In one embodiment, the main body comprises a third opening and the electrically conductive element is configured to be in electrical contact with an electrical contact device which is positioned in said third opening. In one embodiment, the electrically conductive element is configured to electrically contact a voltage and/or current meter and/or generator through an electrical contact device which is positioned in a third opening of the main body.

The electrochemical cell of the present invention has a configuration such that it advantageously facilitates automated operations in laboratories. Furthermore, the modular configuration of this cell, as well as its compatibility with various materials and ease of integration in automated and robotic systems, improves the capacities of the cell compared to the state of the art in terms of efficiency, scalability, and application diversity. The cell of the present invention is useful in renewable energies and advanced material research. The cell of the invention presents an improved performance, is more efficient and scalable, and furthermore allows electrochemical and/or photoelectrochemical measurements to be taken. This is because the cell presents improvements such as manufacturing versatility, compatibility with automation and robotisation, and a modular configuration that facilitates the assembly and implementation of the cell. The cell of the present invention allows an efficient real-time monitoring of electrochemical parameters as a result of the precise arrangement of the electrodes and of the continuous electrical contact between the working electrode and a voltage meter and/or generator, and/or between the working electrode and a current meter and/or generator during experiments, ensuring stability during reactions.

In one embodiment, the electrically conductive element comprises a portion extending to a third opening arranged in the main body of the cell, such that by arranging an electrical contact device in the third opening, the electrical contact device electrically contacts said portion of the electrically conductive element and the latter in turn electrically contacts the working electrode.

In one embodiment, the movable part is a cover which is configured to open and close at least the second cavity of the main body. In this embodiment, the first contact position of the movable part corresponds to a closed position in which the cover at least partially covers or closes at least the second cavity, whereas the second non-contact position of the movable part corresponds to a cover open position in which at least the second cavity is completely uncovered.

In one embodiment, the first opening and/or the second opening of the main body are cylindrical openings. The cylindrical shape of the openings facilitates the assembly of electrodes therein.

In one embodiment, the third opening configured to receive an electrical contact device is a cylindrical opening.

In one embodiment, the main body and/or the movable part are manufactured by means of a 3D printing process. Manufacturing the main body and/or the movable part by 3D printing provides the cell of the invention with a scalable design which allows its integration in different processes, from research to large scale production.

Furthermore, manufacturing by means of 3D printing significantly reduces variations and errors, improving the repeatability and reliability of the experimental process.

In one embodiment, the material of the main body and/or of the movable part is one of the following:
- an epoxy resin,
- polyurethane resin,
- a mixture of polycarbonate and a biodegradable thermoplastic compound,
- high-density polyethylene,
- polypropylene,
- vinyl polychloride,
- low-density polyethylene,
- polylactic acid,
- acrylonitrile-butadiene-styrene,
- polyethylene terephthalate with glycol,
- thermoplastic polyurethane,
- polyether ether ketone,
- carbon fibre-filled filaments,
- any combination thereof.

Advantageously, any of these materials provides suitable chemical resistance and durability.

In one embodiment, the material of the main body and/or of the movable part is a resin and/or at least one polymer material. In one embodiment, different types of resin or polymer materials are used for the material of the main body and/or of the movable part depending on the pressure, temperature, and chemical condition characteristics of each process. These materials are long-lasting and allow manufacturing the main body and/or the movable part by means of 3D printing techniques, with a higher resolution and consistency.

In one embodiment, the material of the main body and of the movable part is the same, which makes the cell easier to manufacture and ensures optimum chemical and physical compatibility between the movable part and the main body. In one embodiment, the material of the main body is different from the material of the movable part.

In one embodiment, the working electrode suitable for being at least partially housed in the second cavity comprises at least one electrically conductive portion configured to come into contact with the electrically conductive element arranged in the movable part. In one embodiment, the working electrode comprises or is made of an electrically conductive material which may or may not be transparent. In one embodiment, the working electrode comprises a substrate and a layer of electrically conductive material arranged in the substrate. In one embodiment, the electrically conductive material is carbon, copper, stainless steel, and/or a transparent conductive oxide (such as indium tin oxide ("ITO") or fluorine doped tin oxide ("FTO")). In one embodiment, the working electrode comprises a current collector. In one embodiment, the working electrode comprises a current collector with an active layer deposited on this current collector.

In one embodiment, the working electrode is a glass plate at least partially coated with an electrically conductive material.

In one embodiment, the electrically conductive element comprises an electrically conductive material selected from the following: titanium, stainless steel, aluminium, copper, nickel, gold, silver, bronze, brass, glassy carbon, or graphite.

In one embodiment, the electrically conductive element comprises a sheet and/or a spring. In this embodiment, the sheet and/or spring are configured to contact the working electrode in the first contact position. In one embodiment, the sheet and/or spring are configured to contact an electrical contact device. In one embodiment, the electrical contact device is arranged in a third opening of the main body. In one embodiment, the sheet and/or spring are configured to contact a voltage meter and/or generator. In one embodiment, the sheet and/or spring are configured to contact a current meter and/or generator. In one embodiment, the sheet and/or spring are configured to contact a voltage and/or current meter and/or generator by means of an electrical contact device arranged in the third opening of the cell. In one embodiment, this sheet and/or spring that comes into contact with said working electrode comprises an electrically conductive material. When the movable part is in its first contact position and the working electrode is arranged in the second cavity, the cell is configured so that the working electrode comes into contact with the sheet and/or spring, which can be in electrical contact with a voltage and/or current meter and/or generator. In this way, the working electrode electrically contacts said voltage and/or current meter and/or generator by means of the sheet and/or spring of the electrically conductive material. The configuration of the movable part facilitates electrical contact between the sheet and/or spring and the working electrode in the cell, as well as in turn with a voltage meter and/or generator and/or with a current meter and/or generator. In the non-contact position of the movable part, the sheet and/or spring are not configured to contact the working electrode housed in the second cavity of the main body of the cell. In one embodiment, the sheet is elastic. In one embodiment, the sheet is rigid.

In one embodiment, the movable part is configured to transition from the first contact position to the second non-contact position through a rotational movement of the movable part with respect to the main body. In this embodiment, in the first contact position, at least part of the movable part and of the electrically conductive element arranged in the movable part are located closer to the second cavity of the main body than in the second contact position. In one embodiment, the rotational movement of the movable part is automated.

In one embodiment, the movable part is connected to the main body by means of a pin. This pin ensures that the movable part is linked to the main body at all times, both in its first contact position and in its second non-contact position, as well as in any intermediate position between both contact and non-contact end positions.

In one embodiment, the movable part is configured to transition from the first contact position to the second non-contact position through a displacement of the movable part with respect to the main body. In this embodiment, in the first contact position, the movable part and the electrically conductive element arranged in the movable part are located closer to the second cavity of the main body than in the second contact position. In one embodiment, the displacement of the movable part is automated. In one embodiment, the main body comprises grooves through which the displacement of the movable part with respect to the main body is guided.

In one embodiment, the main body comprises a front face, a rear face, an upper face, a lower face, and a plurality of side faces. In one embodiment, the second cavity is open towards the upper face of the main body and the openings for the electrode are open towards the lower face of the main body.

In one embodiment, the main body comprises:
an opening facing the second cavity and configured to house an illumination source, and
a transparent window separating the second cavity from the opening.

Advantageously, this embodiment allows the electrochemical cell to be suitable for photoelectrocatalysis experiments, as it allows directly illuminating the working electrode and the electrolyte both for carrying out synthesis reactions and for use thereof in photoinduced reactions.

In one embodiment, the transparent window is made up of glass or quartz.

In one embodiment, the electrochemical cell comprises an illumination source housed in the opening facing the second cavity.

The illumination source is a light-emitting source selected for having an emission wavelength depending on the experiment to be performed in the cell. Furthermore, the illumination source can be coupled to a monochromator for selecting the illumination wavelength. In one embodiment, the illumination source is a LED, a mercury lamp, a xenon lamp, a fluorescent bulb, or any combination thereof.

In one embodiment, the first cavity is open towards the outside of the main body. In one embodiment, in the first contact position, the movable part covers the first cavity, and in the second non-contact position, access to the first cavity is allowed.

Advantageously, access to the first cavity from outside the main body facilitates adding electrolyte into the first cavity and removing electrolyte from same.

In one embodiment, the main body comprises two conduits configured to allow the entry and exit of electrolyte with respect to the first cavity, respectively. These conduits are in fluid communication with the inside of the first cavity.

In this embodiment, the cell of the present invention is configured such that it facilitates connection to electrolyte flow systems, allowing both steady-state operations and operations with constant or intermittent flow. This functionality expands the range of electrochemical experiments that can be performed in the present cell, offering an optimised electrochemical flow design and flexibility to adapt to different experimental protocols.

In one embodiment, the electrochemical cell of the first inventive aspect comprises a reference electrode housed in the first opening of the cell and a counter electrode housed in the second opening of the cell.

In one embodiment, the electrochemical cell comprises an electrolyte housed in the first cavity and the second cavity of the cell.

In one embodiment, the electrochemical cell comprises a working electrode housed at least partially in the second cavity of the cell.

In a second inventive aspect, the present invention has a platform for performing a plurality of electrochemical experiments simultaneously, the platform comprising:
- a plurality of electrochemical cells according to any of the embodiments of the first inventive aspect, wherein for each electrochemical cell there is a reference electrode in the first opening and a counter electrode in the second opening;
- data acquisition means, wherein the data acquisition means comprise at least one sensor configured to detect at least one parameter of the experiment; and
- control means configured to control at least one parameter of the experiment.

The platform of the present invention is an electrochemical platform which is intended to perform multiple electrochemical experiments simultaneously through a plurality of electrochemical cells such as those described above for the first inventive aspect. That is, the platform is adapted to perform electrochemical measurement processes and/or photoelectrochemical measurement processes in a plurality of electrochemical cells simultaneously.

For each electrochemical cell, a reference electrode is placed in the first opening of the cell and a counter electrode is placed in the second opening of the cell.

The plurality of electrochemical cells is configured to operate independently and simultaneously under different experimental conditions. The experimental conditions are defined by at least one parameter of the experiment or experimental parameter of each electrochemical cell. In one embodiment, the at least one parameter of the experiment is one or more of the following: current density, current potential, electrolyte composition, light intensity, reduction and oxidation potential, chronoamperometries, light absorption by the working electrode, and/or light absorption by the electrolyte. The parameters of the experiment can be kept invariable during the experiment or are variable during the experiment. In one embodiment, one or more of the at least one parameter of the experiment is invariable during the experiment and one or more of the at least one parameter of the experiment is variable during the experiment.

The platform comprises data acquisition means comprising at least one sensor configured to detect one or more of the at least one parameter of the experiment related to the electrochemical cells. The data acquisition means allow measuring and recording the parameters of the experiment. In one embodiment, the at least one sensor comprises a spectroscopy sensor and/or an electrochemical sensor. In one embodiment, the at least one sensor is configured to measure one or more of the following: reduction and oxidation potential, chronoamperometries, light absorption by the working electrode, and/or light absorption by the electrolyte. In one embodiment, the data acquisition means are configured to monitor the electrochemical cells in real time. In one embodiment, the data acquisition means are in contact with the electrochemical cells. In one embodiment, the data acquisition means comprise a voltage meter and/or generator. In one embodiment, the data acquisition means comprise a current meter and/or generator. In one embodiment, the data acquisition means comprise a potentiostat.

In relation to the control means comprised in the platform, they are understood to be a centralised control system through which the experimental conditions of each electrochemical cell are controlled, that is, one or more of the at least one parameter of the experiment is controlled. The control means are configured to set and/or modify at least one parameter of the experiment. In one embodiment, the control means are configured to operate automatically and/or remotely. In one embodiment, the control means are configured to control one or more of the following: light intensity, current potential, and electrolyte composition.

The platform of the invention advantageously allows optimising experimental conditions and analysing material efficiency and performance in electrochemical processes.

In one embodiment, the plurality of electrochemical cells is arranged forming a cell array.

In one embodiment, the reference electrode and the counter electrode are cylindrical. In another embodiment, these electrodes have a geometry other than cylindrical.

In one embodiment, the platform comprises a working electrode housed at least partially inside the second cavity of each of the electrochemical cells.

In one embodiment, the platform comprises an illumination source housed in an opening of the main body of at least one of the electrochemical cells, wherein the opening is facing the second cavity of the electrochemical cell.

In one embodiment, the working electrode comprises a current collector made up of one of the following materials: titanium, stainless steel, aluminium, copper, nickel, gold, silver, bronze, brass, glassy carbon (vitreous carbon), and graphite. Those collectors are selected depending on the process conditions, such as corrosion resistance or durability, for performing prolonged applications even in aggressive environments.

In one embodiment, the at least one sensor of the data acquisition means is a spectroscopy sensor or an electrochemical sensor.

In one embodiment, the platform comprises an automated robotic system configured to perform one or more of the following actions:
- manipulating the plurality of electrochemical cells, and/or
- at least partially introducing a working electrode in each electrochemical cell to be actuated, and/or
- introducing an electrolyte in each electrochemical cell to be actuated.

According to this embodiment, the platform advantageously allows a plurality of electrochemical experiments to be carried out simultaneously in an automated manner.

In one embodiment, the automated robotic system is configured to connect the electrically conductive element arranged in the movable part of the cell with a voltage meter and/or generator. In one embodiment, the automated robotic system is configured to connect the electrically conductive element arranged in the movable part of the cell with a current meter and/or generator.

Actuating an electrochemical cell will be understood to be the implementation thereof for carrying out an electrochemical process. **To** that end, there is a need to at least partially introduce a working electrode in each cell, particularly in the second cavity of the cells.

In one embodiment, manipulating the cell comprises moving the movable part between the first contact position and the second non-contact position. In one embodiment, manipulating the cell also comprises positioning the required electrodes in the corresponding openings of the main body of the cell.

In one embodiment, the automated robotic system is a robot comprising a robotic arm.

In one embodiment, the control means are in communication with the electrochemical cells, the automated robotic system, and the data acquisition means.

In one embodiment, the control means are further configured to control the actuation of the automated robotic system.

In one embodiment, the control means are configured to:
- control the actuation of the automated robotic system and/or
- adjust the parameters of the experiment of the electrochemical cells in the platform
based on the data they receive from the data acquisition means.

In a third inventive aspect, the invention provides a method for training a machine learning algorithm for the characterisation of working electrodes, wherein the method comprises:
a) performing a plurality of electrochemical experiments in a plurality of electrochemical cells of a platform according to any of the embodiments of the second inventive aspect, wherein each electrochemical cell includes a working electrode, wherein the experiments are performed in experimental conditions defined by at least one parameter of the experiment, and wherein the experiments are performed:
   - for working electrodes that differ from one another in at least one initial property, and/or
   - in experimental conditions that differ from one another;
b) obtaining at least one parameter of the experiment of each electrochemical cell by means of the at least one sensor of the data acquisition means;
c) measuring, for each electrochemical cell after performing the electrochemical experiment, at least one final property of the working electrode; and
d) training a machine learning algorithm with training data which comprises: at least one initial property of the working electrode, the at least one parameter of the experiment obtained, and the at least one final property of the working electrode obtained in step c).

Advantageously, once the machine learning algorithm is trained, it is possible to use said algorithm to select the working electrodes that have at least one desired final property and based on at least one parameter of the experiment to be performed.

In one embodiment, the at least one parameter of the experiment is one or more of the following: current density, current potential, electrolyte composition, light intensity, reduction and oxidation potential, chronoamperometries, light absorption by the working electrode, and/or light absorption by the electrolyte. In one embodiment, the at least one parameter of the experiment is a variable parameter and is one or more of: reduction and oxidation potential, chronoamperometries, light absorption by the working electrode, and/or light absorption by the electrolyte.

In one embodiment, the at least one property of the working electrode is one of the following: current density, photocurrent density, overpotential, onset potential, field factor, and stability. Initial properties are the properties before performing the experiment.

Final properties are the properties after performing the experiment.

In one embodiment, the machine learning algorithm is comprised in a machine learning module. In one embodiment, this machine learning module is a processing unit. In another embodiment, this machine learning module is comprised in the control means of the platform according to the second inventive aspect.

In another inventive aspect, the invention provides an electrochemical system comprising at least one electrochemical cell according to any of the embodiments of the first inventive aspect.

In one embodiment, the electrochemical system comprises a reference electrode housed in the first opening of the cell and a counter electrode housed in the second opening of the cell.

In one embodiment, the electrochemical system comprises a working electrode housed at least partially in the second cavity.

In one embodiment, the electrochemical system comprises an electrolyte arranged in the first cavity and in the second cavity.

All the features and/or steps of methods described in this specification (including the claims, description, and drawings) can be combined in any combination, with the exception of combinations of such mutually exclusive features.

### DESCRIPTION OF THE FIGURES

These and other features and advantages of the invention will become more apparent based on the following detailed description of preferred embodiments given only by way of non-limiting illustrative examples in reference to the attached figures.
- Figure 1: This schematic figure shows a perspective view of an electrochemical cell according to a first embodiment of the present invention.
- Figure 2: This schematic figure shows a top view of the electrochemical cell of Figure 1.
- Figure 3: This schematic figure shows a bottom view of the electrochemical cell of Figure 1.
- Figure 4: This figure shows a front view of the electrochemical cell of Figure 1.
- Figure 5: This schematic figure shows a side view of the electrochemical cell of Figure 1.
- Figure 6: This schematic figure shows a perspective view of an electrochemical cell according to a second embodiment of the present invention.
- Figure 7: This schematic figure shows a top view of the electrochemical cell of Figure 6.
- Figure 8: This schematic figure shows a bottom view of the electrochemical cell of Figure 6.
- Figure 9: This schematic figure shows a front view of the electrochemical cell of Figure 6.
- Figure 10: This schematic figure shows a side view of the electrochemical cell of Figure 6.
- Figure 11: This schematic figure shows a cross-section of a main body of an electrochemical cell according to a third embodiment of the present invention.
- Figure 12: This schematic figure shows a front view of the cross-section of Figure 11.
- Figure 13: This schematic figure shows a longitudinal section of the main body of Figure 11.
- Figure 14: This schematic figure shows a front view of the longitudinal section of Figure 13.
- Figure 15: This schematic figure shows a perspective view of an electrochemical cell according to a fourth embodiment of the present invention.
- Figure 16: This schematic figure shows a top view of the electrochemical cell of Figure 15.
- Figure 17: This schematic figure shows a bottom view of the electrochemical cell of Figure 15.
- Figure 18: This figure shows a front view of the electrochemical cell of Figure 15.
- Figure 19: This schematic figure shows a side view of the electrochemical cell of Figure 15.
- Figure 20: This schematic figure shows a perspective view of an electrochemical cell according to a fifth embodiment of the present invention.
- Figure 21: This schematic figure shows a perspective view of an electrochemical cell according to a sixth embodiment of the present invention.
- Figure 22: This figure shows a side view of the cell of Figure 21.
- Figure 23: This schematic figure shows a perspective view of an electrochemical cell according to a seventh embodiment of the present invention.
- Figure 24: This figure shows the results of current versus time in an electrodeposition process performed in an electrochemical cell according to an embodiment of the present invention.
- Figure 25: This figure shows the results of current versus voltage in an electrodeposition process performed in an electrochemical cell according to an embodiment of the present invention.
- Figure 26: This schematic figure shows a front view of a platform according to an embodiment of the present invention.
- Figure 27: Data flow for training a machine learning algorithm with the data generated by the platform of the invention and for use of said algorithm.

### DETAILED DESCRIPTION OF THE INVENTION

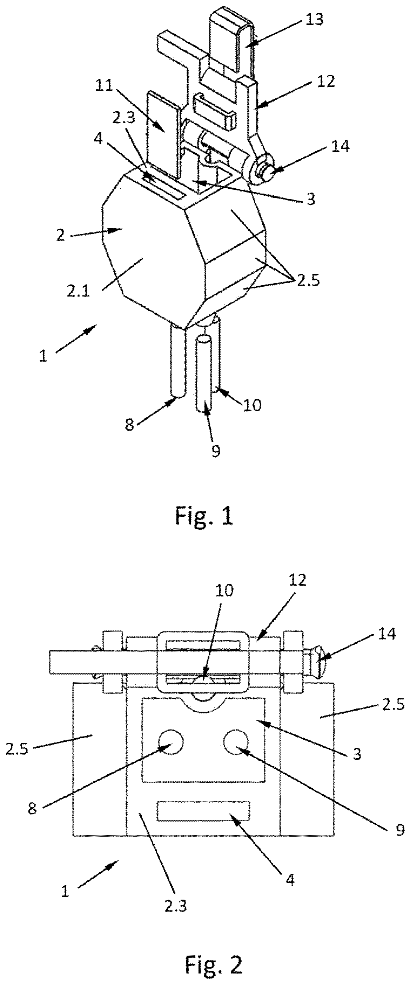

Figures 1 to 5 show an electrochemical cell (1) suitable for an electrochemical measurement process according to a first embodiment of the present invention.

Figure 1 shows a perspective view of the cell (1) of this first embodiment. The cell (1) comprises a main body (2) which comprises, in this embodiment, a front face (2.1), a rear face (2.2), an upper face (2.3), a lower face (2.4), and a plurality of side faces (2.5). In this embodiment, the side faces (2.5) together with the upper face (2.3) and the lower face (2.4) form an octagonal-shaped main body (1). This configuration facilitates the securing and handling of the cell (1) through a robotic arm without affecting the cell itself or the processes being carried out therein. In other embodiments, the main body (2) may have a different shape and/or a different number of faces, for example, a different number of side faces.

The main body (2) of the cell (1) comprises two cavities (3, 4) open towards its upper face (2.3), particularly a first cavity (3) and a second cavity (4). Both cavities (3, 4) can be seen in Figure 2. The first cavity (3) is intended to receive an electrolyte therein, whereas the second cavity (4) is intended to receive a working electrode (11) therein.

Figure 1 shows a working electrode (11) that can be inserted into the second cavity (4). In this embodiment, the inner volume of the first cavity (3) is greater than the inner volume of the second cavity (4), as can be seen in Figures 1 and 2. In one embodiment, the working electrode (11) is a glass plate with a surface coated with an electrically conductive material.

The first cavity (3) and the second cavity (4) are in fluid communication with one another, for example, by means of a channel arranged inside the main body (2). Therefore, the electrolyte is not only found in the first cavity (3), but is distributed between the first cavity (3) and the second cavity (4), thereby allowing the electrolyte to reach the working electrode (11) when the working electrode (11) is housed in the second cavity (4).

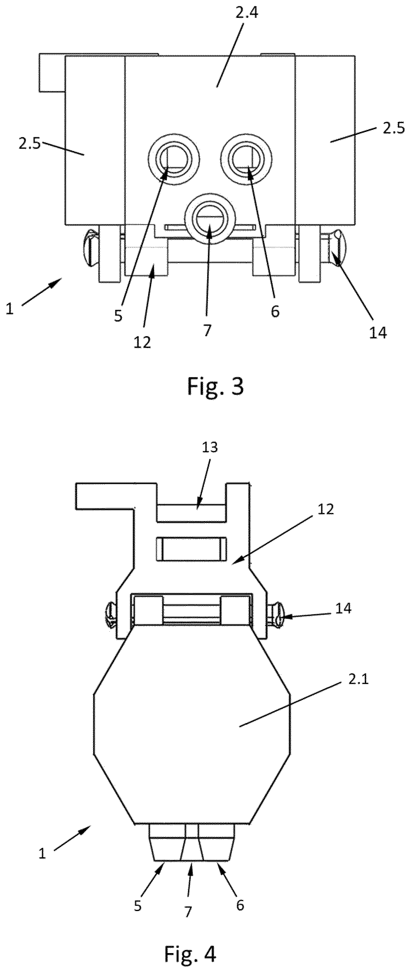

The main body (2) comprises two openings (5, 6) arranged on its lower face (2.4) as shown in Figure 3, particularly a first opening (5) configured to receive a reference electrode (8) and a second opening (6) configured to receive a counter electrode (9). Figure 1 shows two electrodes (8, 9), where these electrodes have been depicted below the cell (1). There is a reference electrode (8) configured to be housed in the first opening (5) and a counter electrode (9) configured to be housed in the second opening (6) of the main body (2). In this embodiment, the two electrodes (8, 9) are cylindrical and the respective openings (5, 6) in which the reference electrode (8) and the counter electrode (9) are housed also have a substantially cylindrical configuration.

The main body (2) may further comprise a third opening (7) arranged on the lower face (2.4) as shown in Figure 3. This third opening (7) is configured to receive an electrical contact device (10). However, the third opening (7) may not be present in the cell (1) of the present invention.

In one embodiment, the reference electrode (8) is an Ag/AgCl electrode, a saturated calomel electrode, a stainless steel electrode, a standard hydrogen electrode, or a saturated copper electrode, among others. In one embodiment, the counter electrode (9) is made of stainless steel, platinum, gold, copper, graphite, or glassy carbon, among others. In one embodiment, the reference electrode (8) and the counter electrode (9) are made of stainless steel. In one embodiment, the working electrode (11) is a working electrode made of titanium, stainless steel, aluminium, copper, nickel, gold, silver, bronze, brass, glassy carbon (vitreous carbon), or graphite.

In this first embodiment, as shown in Figure 3, the first opening (5) and the second opening (6) are arranged next to one another and are both in communication with the first cavity (3). In Figure 2, the reference electrode (8) and the counter electrode (9) can be seen in the first cavity (3) when they are housed in their respective openings (5, 6). In one embodiment, the reference electrode (8) and the counter electrode (9) are retained in the first cavity (3) by means of precise fitting in the openings (5, 6), without having to use sealing means or gaskets. Lastly, in this embodiment, the third opening (7) is arranged forming a triangular configuration with the other two openings (5, 6) and partially going through the main body (2) on the rear face (2.2) thereof. In one embodiment, the electrical contact device (10) is retained by means of precise fitting in the third opening (7), without having to use sealing means or gaskets. In one embodiment, the three openings (5, 6, 7) are arranged substantially equidistant with respect to one another.

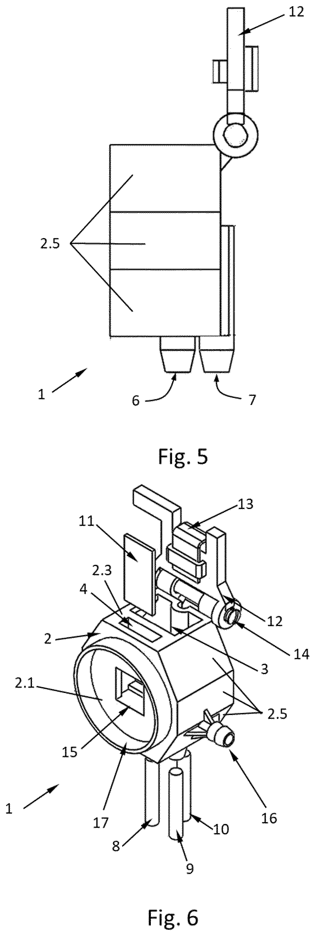

Figures 4 and 5 show how in this embodiment the main body (2) has protrusions projecting from the lower face (2.4) and how the openings (5, 6, 7) are located in those protrusions. Furthermore, as can be seen in Figure 5, the protrusion where the third opening (7) is located projects from the rear face (2.2) of the main body (2.1).

The cell (1) further comprises a movable part (12) connected to the main body (2) and an electrically conductive element arranged in the movable part (12). The electrically conductive element is configured to be in electrical contact with the working electrode (11) when the latter is partially housed in the second cavity (4) and the movable part (12) is in the first contact position. Furthermore, the electrically conductive element is configured to be in electrical contact with the electrical contact device (10) when the latter is housed in the third opening (7) of the cell (1). Particularly, the movable part (12) moves between a first contact position and a second non-contact position. In the first contact position, the electrically conductive element is in contact with the working electrode (11) when the latter is housed in the second cavity (4), and in the second non-contact position, the electrically conductive element is not in contact with the working electrode (11).

In this first embodiment, the movable part is a cover (12) connected to the main body (2), as can be seen in any of Figures 1 to 5. In this embodiment, the cover (12) is connected to the rear face (2.2) of the main body (2). More particularly, in this embodiment, the cover (12) is connected to the main body (2) by means of a pin (14). The cover (12) rotates about the pin (14) with respect to the main body (2) to provide two end positions: a first closed position (corresponding to a first contact position of the movable part) and a second open position (corresponding to a second non-contact position of the movable part). In the first closed position (not shown in the figures), the cover (12) is arranged on the upper face (2.3) of the main body (2) at least partially covering the first cavity (3). That is, in the first closed position, the cover (12) moves closer to the second cavity (4). In one embodiment, in the first closed position, the cover (12) at least partially covers the second cavity (4). In the embodiment shown in the figures, in the second open position, the cover (12) is arranged substantially perpendicular to the upper face (2.3) of the main body, thereby being arranged away from the second cavity (4), and allowing access to the first cavity (3) and the second cavity (4). In this embodiment, the cover (12) is configured to transition from the closed position to the open position through a rotational movement of the cover (12) with respect to the main body (2).

In this embodiment, the electrically conductive element is a sheet (13) of electrically conductive material. This sheet (13) is in contact with the electrical contact device (10) in any of the two positions of the cover (12) and is in contact with the working electrode (11) when the latter is housed in the second cavity (4) and the cover (12) is in its first contact position.

The main body (2) and the movable part (12) of this first embodiment are obtained by means of a 3D printing process, wherein the material thereof is a resin and/or a polymer material. Preferably, the material of the main body (2) and of the movable part (12) is an epoxy resin or a polyurethane resin, or a mixture of polycarbonate and a biodegradable thermoplastic compound, high-density polyethylene, polypropylene, vinyl polychloride, low-density polyethylene, polylactic acid (PLA), acrylonitrile-butadiene-styrene (ABS), polyethylene terephthalate with glycol (PETG), thermoplastic polyurethane (TPU), polyether ether ketone (PEEK), carbon fibre-filled filaments, or a combination thereof.

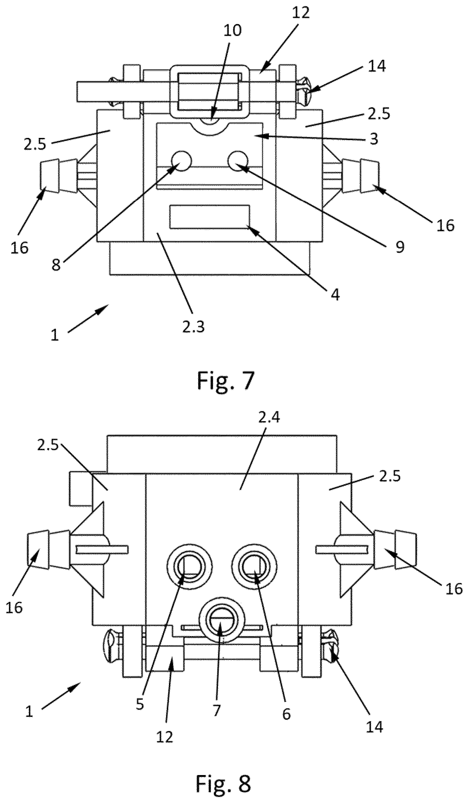

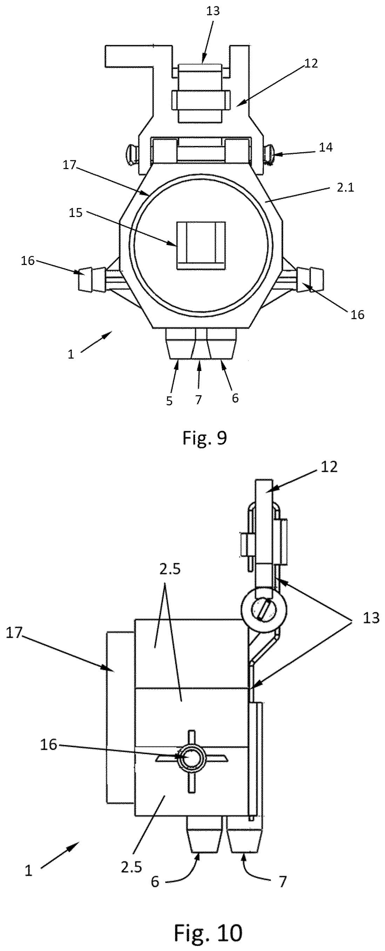

Figures 6 to 10 show an electrochemical cell (1) suitable for a photoelectrochemical measurement process according to a second embodiment of the present invention.

The electrochemical cell (1) shown in this second embodiment has a structural configuration similar to the configuration described above for the first embodiment. However, as can be seen in Figure 6, the cell (1) of this embodiment includes an opening (15) on the front face (2.1) of the main body (2). This opening (15) is facing the second cavity (4) and houses therein an illumination source, for example, a LED (not shown in the figures). In this second embodiment, the front face (2.1) comprises a circular wall (17) surrounding the opening (15), as can be seen in Figure 6. The circular wall (17) around the opening (15) helps to direct and focus light in photoelectrochemical experiments, thereby improving measurement precision.

Furthermore, in this second embodiment, the main body (2) comprises two conduits (16) connected to the first cavity (3) of the main body (2) from the side faces (2.5) thereof. One of the conduits (16) is configured to allow the entry of electrolyte into the first cavity (3) and the other is configured to allow the exit of electrolyte from the first cavity (3).

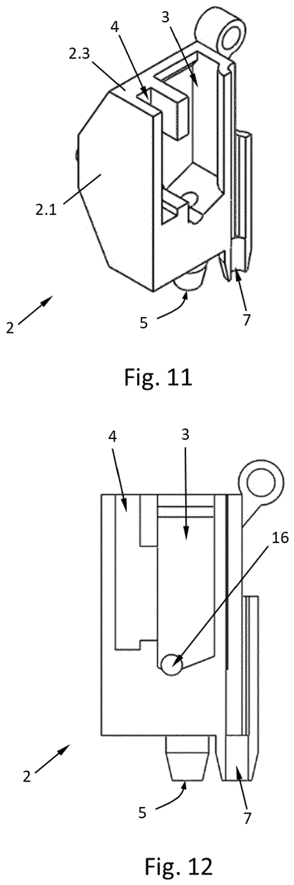

Figures 11 to 14 show a main body (2) of an electrochemical cell (1) according to a third embodiment of the present invention. The structure of the main body (2) which is described below for the first cavity (3) and the second cavity (4) and for the first opening (5), the second opening (6), and the third opening (7) in relation to this third embodiment is also applicable for the main body (2) of the cells (1) described for the first and second embodiments shown in Figures 1 to 5 and 6 to 10, respectively.

The main body (2) shown in this third embodiment has a structural configuration such as the one described for the first embodiment. However, in this third embodiment, the main body (2) comprises two conduits (16) connected to the first cavity (3) of the main body (2) from the side faces (2.5) thereof. One of the conduits (16) is configured to allow the entry of electrolyte into the first cavity (3) and the other is configured to allow the exit of electrolyte from the first cavity (3). Except for the presence of conduits (16), the structure of the main body (2) of Figures 11 to 14 is similar to the structure of the main body (2) of Figures 1 to 5.

Compared to the main body (2) of the second embodiment shown in Figures 6 to 10, the structure of the main body (2) of the third embodiment shown in Figures 11 to 14 is similar, except for the presence of the opening (15) on the front face (2.1) of the main body (2) of the second embodiment, which is not present in the third embodiment.

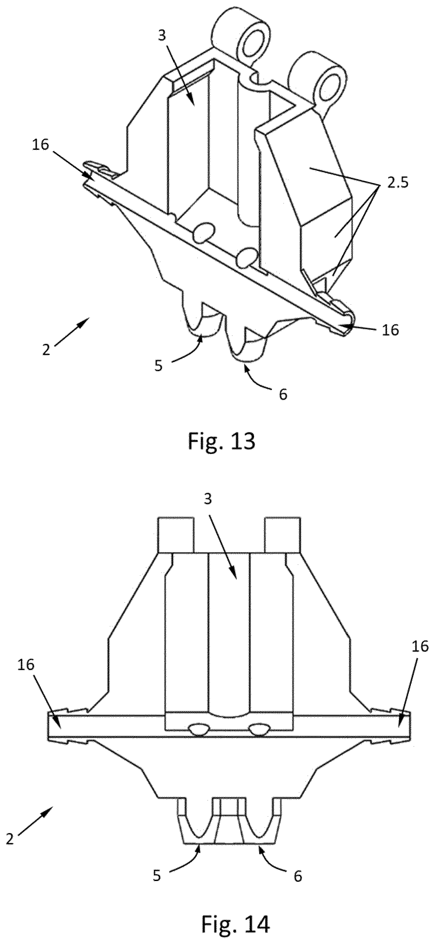

Figures 11 and 12 show two views of a section of the main body (2) made along a plane that goes through the front face (2.1) and the rear face (2.2) of the main body (2). Figures 13 and 14 show two views of a section of the main body (2) made along a plane that goes through the side faces (2.5), the upper face (2.3), and the lower face (2.4) of the main body (2).

Figures 11 and 12 show the first cavity (3) configured to receive an electrolyte and the second cavity (4) configured to receive a working electrode (11). In this embodiment, both cavities (3, 4) are open towards the upper face (2.3) of the main body (2). In an embodiment in which the main body (2) does not comprise conduits (16) connected to the first cavity (3), the electrolyte can be supplied to and removed from the first cavity (3) through the upper face (2.3) of the main body (2). In the embodiments in which the main body (2) comprises conduits (16) connected to the first cavity (3), the electrolyte can be supplied to and removed from the first cavity (3) by means of said conduits (16).

Figure 11 shows that the first cavity (3) and the second cavity (4) are in fluid communication with one another, such that an electrolyte supplied to the first cavity (3) also accesses the second cavity (4).

Figures 11 to 14 show the structure of the first opening (5), the second opening (6), and the third opening (7). Particularly, the way in which the first opening (5) and the second opening (6) communicate the outside of the main body (2) with the first cavity (3) can be seen. In that sense, when the reference electrode (8) is housed in the first opening (5) and the counter electrode (9) is housed in the second opening (6), they are both partially inserted into the first cavity (3) and exposed to the electrolyte, when electrolyte is supplied to the first cavity (3).

The structure of the third opening (7) configured to house an electrical contact device (10) and the way in which the third opening (7) is separated from the first cavity (3) can also be seen in these figures. In this embodiment, the first opening (5), the second opening (6), and the third opening (7) have a substantially cylindrical configuration.

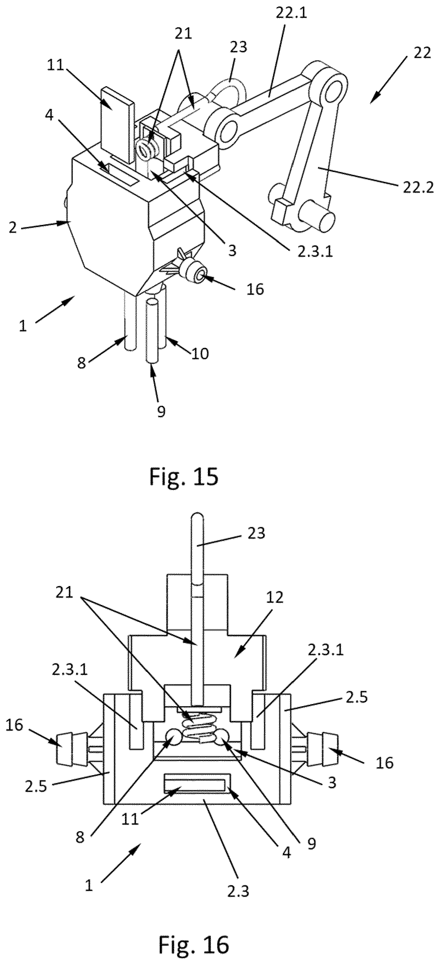

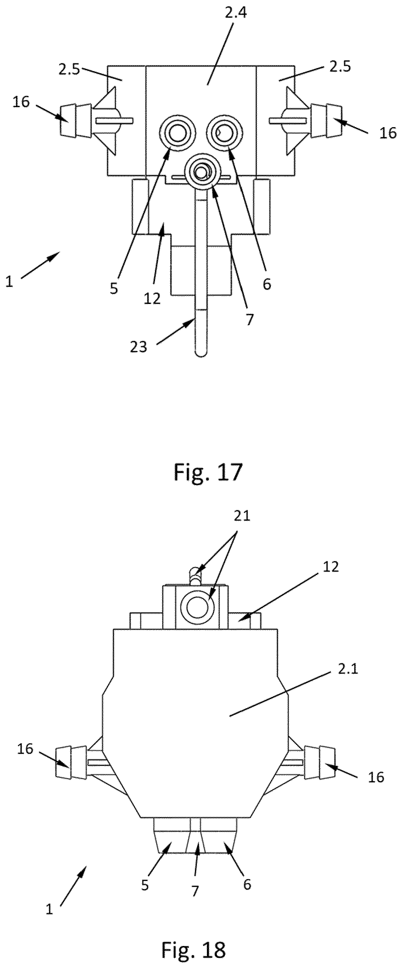

Figures 15 to 19 show an electrochemical cell (1) suitable for an electrochemical measurement process according to a fourth embodiment of the present invention.

The electrochemical cell (1) shown in this fourth embodiment has a structural configuration similar to the configuration described above for the first embodiment. However, unlike the first embodiment, in this embodiment the movable part (12) is displaceable with respect to the main body (2). That is, the movable part (12) transitions from a first contact position to a second non-contact position through its displacement with respect to the main body. Particularly, the main body (2) comprises grooves (2.3.1) on its upper face (2.3) through which the movable part (12) is guided as it displaces between the first contact position and the second non-contact position.

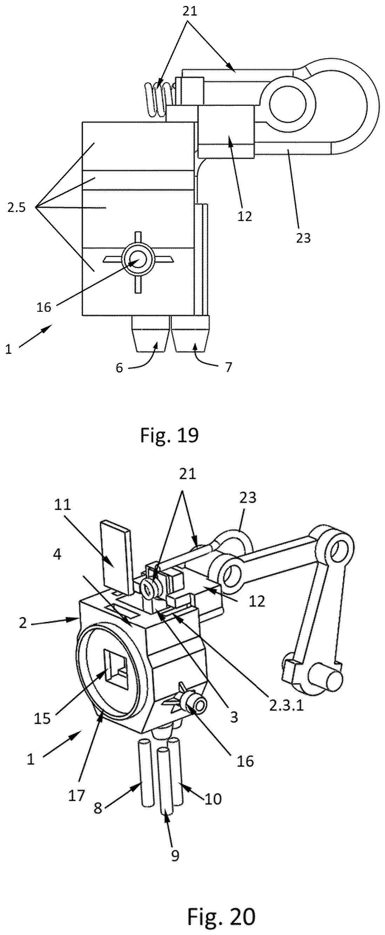

Furthermore, in this embodiment, the electrically conductive element arranged in the movable part (12) comprises a spring (21) connected to a cable (23) extending from the spring (21) to the inside of the third opening (7) where an electrical contact device (10) is housed, as can be seen in Figure 19. Both the spring (21) and the cable (23) are made of an electrically conductive material. The spring (21) is arranged on the movable part (12) and projects from same substantially parallel to the linear displacement movement performed by the movable part (12), such that in the first contact position the part of the spring (21) projecting from the movable part (12) is arranged above the second cavity (4) to enable contacting the working electrode (11) when it is housed at least partially in the second cavity (4).

Figure 15 shows how the cell (1) further comprises a set of connecting rods (22) connected to the movable part (12), wherein this set of connecting rods (22) is configured to actuate the displacement of the movable part (12) between the first position and the second position. Specifically, the set of connecting rods (22) is formed by a first connecting rod (22.1) fixed to the movable part (12) at one end and to a second connecting rod (22.2) at its opposite end. The second connecting rod (22.2) is configured to rotate about its end opposite the end fixed to the first connecting rod (22.1), such that by rotating the second connecting rod (22.2), displacement of the first connecting rod (22.1), and accordingly displacement of the movable part (12), are caused. In one embodiment, the actuation of the set of connecting rods (22) is automated. This set of connecting rods (22) is not shown in Figures 16 to 19.

Unlike the first embodiment, the electrochemical cell (1) shown in Figure 15 comprises a main body (2) with a different configuration in terms of its external shape and the number of side faces forming same. Furthermore, this embodiment of Figure 15 shows how the main body (2) comprises two conduits (16) configured to be connected to the first cavity (3). Particularly, one of the conduits (16) is configured to allow the entry of electrolyte into the first cavity (3) and the other is configured to allow the exit of electrolyte from the first cavity (3).

Figure 20 shows an electrochemical cell (1) suitable for a photoelectrochemical measurement process according to a fifth embodiment of the present invention.

The electrochemical cell (1) shown in this fifth embodiment has a structural configuration similar to the configuration described above for the fourth embodiment. However, unlike the fourth embodiment, this embodiment shows how the cell (1) comprises an opening (15) on the front face (2.1) of the main body (2). This opening (15) is facing the second cavity (4) and houses therein an illumination source, for example, a LED (not shown in the figure). Furthermore, in this embodiment, the front face (2.1) comprises a circular wall (17) surrounding the opening (15). The circular wall (17) around the opening (15) helps to direct and focus light in photoelectrochemical experiments, thereby improving measurement precision.

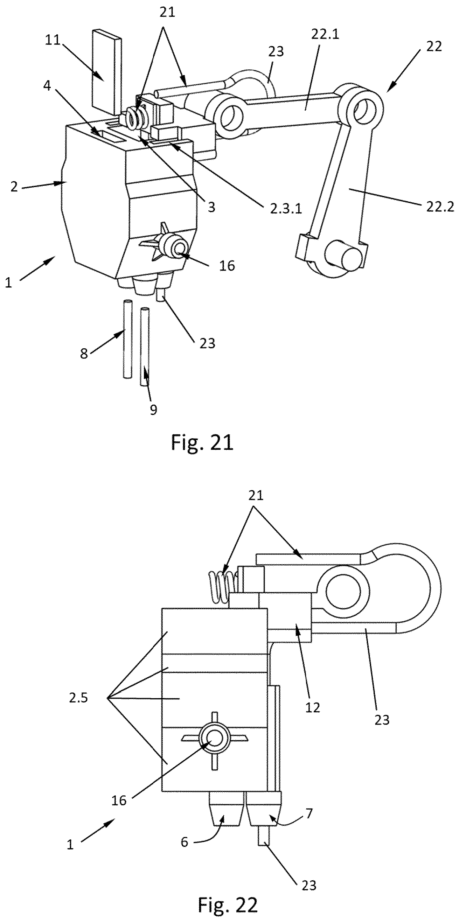

Figures 21 to 22 show an electrochemical cell (1) suitable for an electrochemical measurement process according to a sixth embodiment of the present invention.

The electrochemical cell (1) shown in this sixth embodiment has a structural configuration similar to the configuration described above for the fourth embodiment. Like in the fourth embodiment, in the sixth embodiment the electrically conductive element arranged in the movable part (12) comprises a spring (21). The spring (21) is connected to a cable (23). However, unlike the fourth embodiment, in this embodiment the cable (23) is passed through the third opening (7). In one embodiment, this cable (23) is configured to be connected to a voltage meter and/or generator (not shown in the figures). In another embodiment, the cable (23) is configured to be connected to a voltage meter and/or generator through an electrical contact device. In one embodiment, this cable (23) is configured to be connected to a current meter and/or generator (not shown in the figures). In another embodiment, the cable (23) is configured to be connected to a current meter and/or generator through an electrical contact device.

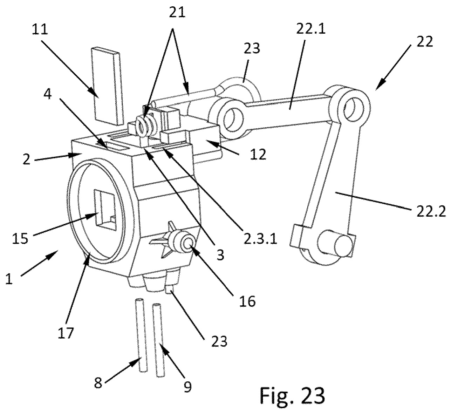

Figure 23 shows an electrochemical cell (1) suitable for a photoelectrochemical measurement process according to a seventh embodiment of the present invention.

The electrochemical cell (1) shown in this seventh embodiment has a structural configuration similar to the configuration described above for the fifth embodiment. Like in the fifth embodiment, in the seventh embodiment the electrically conductive element arranged in the movable part (12) comprises a spring (21). The spring (21) is connected to a cable (23). However, unlike the fifth embodiment, in this embodiment the cable (23) is passed through the third opening (7). In one embodiment, this cable (23) is configured to be connected to a voltage meter and/or generator. In another embodiment, the cable (23) is configured to be connected to a voltage meter and/or generator through an electrical contact device. In one embodiment, this cable (23) is configured to be connected to a current meter and/or generator. In another embodiment, the cable (23) is configured to be connected to a current meter and/or generator through an electrical contact device.

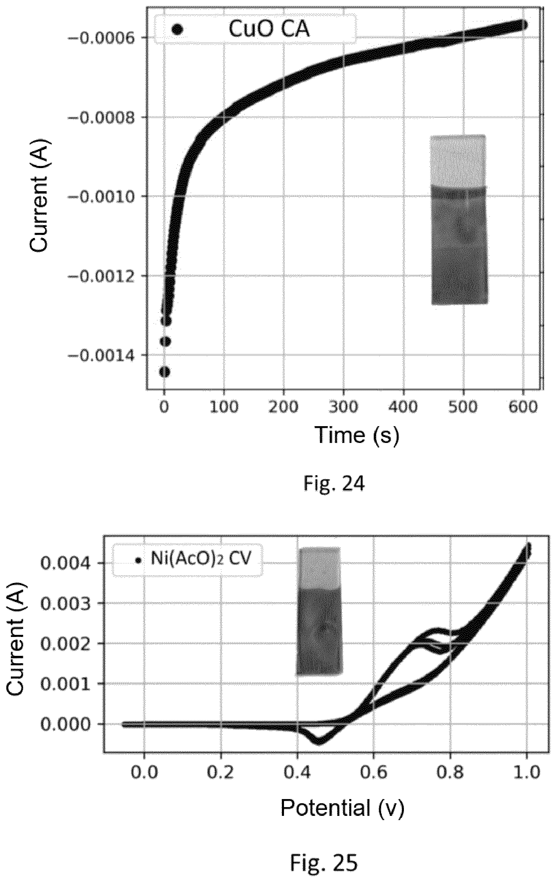

Figure 24 shows an example in which current (A) is depicted versus time (s) in an electrodeposition process of a copper oxide (Cu₂O) cathode on a working electrode (11), where the electrodeposition process was performed in an electrochemical cell (1) according to the invention. In this example, the working electrode (11) is an indium tin oxide (ITO)-coated glass plate. In this process, a copper nitrate solution (Cu(NO₃)₂ with a concentration of 1 M was used as the electrolyte to be incorporated in the first cavity (3). Particularly, the volume of this solution added to the electrochemical cell (1) is 9 ml. Furthermore, a potentiostat was used to perform electrochemical measurements. To perform electrodeposition, chronoamperometry was performed at 0.5 V with respect to the stainless steel reference electrode (8) (about 0.006 A) for 60 seconds, maintaining a current density of between 2 and 4 mA cm⁻². This process was performed 10 times (thereby depositing 10 layers) to obtain suitable thickness in the electrodeposited layer. This potential was selected to prevent inadequate adherence of Cu₂O on the surface of indium tin oxide (ITO), thereby ensuring that a uniform layer is obtained. This method allows an efficient and controlled electrodeposition of copper on the surfaces of ITO, optimising the conditions to achieve uniform deposits. Figure 24 shows results that validate the efficiency of the cell of the invention for the electrodeposition of Cu₂O on the ITO-coated glass plate.

Figure 25 shows an example in which current (A) is depicted versus potential (V) in an electrodeposition process of a nickel oxide anode on a working electrode (11), in which the electrodeposition process was performed in an electrochemical cell (1) according to the invention. In this example, the working electrode (11) is an indium tin oxide (ITO)-coated glass plate. By using the same configuration as for the cell (1) of the example of Figure 21, measurements were performed in a potentiostat. However, in this case, a solution of nickel acetate Ni(AcO)₂ dissolved in water, with a concentration of 0.3 M, was used as a nickel source. To complete the electrodeposition, a potential of 0.9 V was applied with respect to the stainless steel reference electrode (8) (where a current of 0.004 A was observed) for 300 seconds. Figure 25 shows results which validate the efficiency of the cell for the electrodeposition of Ni(AcO)₂ on ITO, highlighting the precise control, as evidenced by the curve obtained.

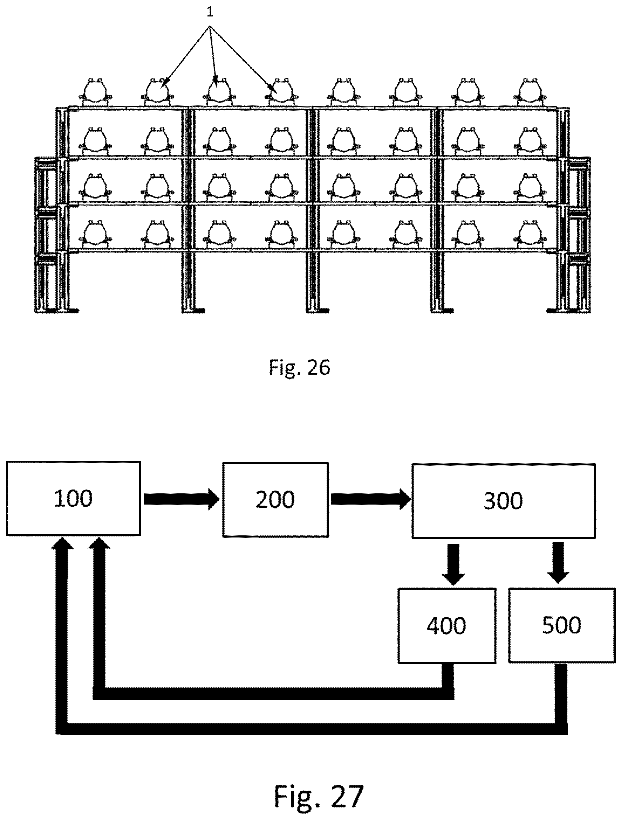

Figure 26 schematically shows a platform according to an embodiment of the invention which is suitable for performing a plurality of electrochemical experiments simultaneously. The platform comprises a plurality of cells (1) such as the ones described for the preceding embodiments, all of them being arranged forming an array. Furthermore, there have been provided in each cell (1) a reference electrode (8) in the first opening (5) and a counter electrode (9) in the second opening (6). There have also been provided in each cell (1) an electrolyte distributed in both the first cavity (3) and the second cavity (4) of the cell, as well as a working electrode (11) partially housed in the second cavity (4) of each cell (1).

The platform comprises data acquisition means comprising at least one sensor configured to detect at least one parameter of the experiment. The platform also comprises control means configured to control at least one parameter of the experiment.

In an embodiment not shown in the figures, the platform further comprises an automated robotic system configured to manipulate the plurality of electrochemical cells (1), and/or to at least partially introduce a working electrode (11) in each electrochemical cell (1) to be actuated, and/or to introduce an electrolyte in each electrochemical cell (1) to be actuated. In one embodiment, the step of manipulating the cells (1) comprises moving the movable part (12) between the first contact position and the second non-contact position and/or positioning the electrodes in the corresponding openings of the main body (2) of the cell (1) and/or positioning the working electrode (11) in the second cavity (4) of the cell (1).

The invention furthermore provides a method for training a machine learning algorithm for the characterisation of working electrodes (11). According to an embodiment, this method comprises the following steps.
a) performing a plurality of electrochemical experiments in the plurality of electrochemical cells (1) arranged in the platform described previously, where each electrochemical cell (1) includes a working electrode (11), wherein the experiments are performed in experimental conditions defined by at least one parameter of the experiment, and wherein the experiments are performed:
   - for working electrodes (11) that differ from one another in at least one initial property, and/or
   - in experimental conditions that differ from one another;
b) obtaining at least one parameter of the experiment of each electrochemical cell (1) by means of the at least one sensor of the data acquisition means;
c) measuring, for each electrochemical cell (1) after performing the electrochemical experiment, at least one final property of the working electrode (11); and
d) training a machine learning algorithm with training data which comprises: at least one initial property of the working electrode (11), the at least one parameter of the experiment obtained, and the at least one final property of the working electrode (11) obtained in step c).

Figure 27 schematically shows the data flow for training a machine learning algorithm for the characterisation of working electrodes according to an embodiment of the method of the present invention, as well as the use of said algorithm.

As schematically shown, a plurality of electrochemical experiments are performed (100) in the plurality of electrochemical cells (1) of the platform of the invention, wherein the experiments are performed in experimental conditions defined by at least one parameter of the experiment, and wherein the experiments are performed:
- for working electrodes (11) that differ from one another in at least one initial property, and/or
- in experimental conditions that differ from one another.

**The** data generated by the platform of the invention is recorded (200), said data comprising at least one parameter of the experiment of each electrochemical cell (1) and at least one final property of the working electrode (11).

A machine learning algorithm is trained (300) with training data which comprises: data generated by the platform and at least one initial property of the working electrode (11) of each cell.

Once the machine learning algorithm is trained, said algorithm can be used to select (400) the initial properties of the working electrode and/or the parameters of the experiment needed to obtain a working electrode (10) with the desired final properties. After selecting (400) the initial properties of the working electrode (11) and/or the parameters of the experiment needed to obtain a working electrode (11) with the desired final properties, new experiments with said initial properties of the working electrode (11) and/or said parameters of the experiment can be performed (100) in the platform and data generated by the platform for said new experiments can be recorded (200). Said data generated by the platform can be used to validate the machine learning algorithm, checking if the obtained final properties of the working electrode (11) correspond to the desired final properties of the working electrode (11). Additionally or alternatively, said data generated by the platform can be used as training data to continue training (300) the machine learning algorithm. **The** precision of the machine learning algorithm is thereby improved.

Additionally or alternatively, the trained machine learning algorithm can be used to predict (500) the final properties of the working electrode (11) for new experiments (i.e., for new combinations of parameters of the experiment and of initial properties of the working electrode (11)). By performing (100) experiments with said new combinations of parameters of the experiment and of initial properties of the working electrode (11) and recording (200) the data generated by the platform for said experiments, the data generated by the platform can be used to validate the machine learning algorithm, checking if the obtained final properties of the working electrode (11) correspond to the expected final properties of the working electrode (11). Additionally or alternatively, said data generated by the platform can be used as training data to continue training (300) the machine learning algorithm. The precision of the machine learning algorithm is thereby improved.

## Claims

1. An electrochemical cell (1) comprising:
- a main body (2) comprising:
∘ a first cavity (3) configured to receive an electrolyte;
∘ a second cavity (4) configured to at least partially house a working electrode (11), the second cavity (4) being in fluid communication with the first cavity (3); and
∘ a first opening (5) configured to receive a reference electrode (8) and a second opening (6) configured to receive a counter electrode (9), the first opening (5) and the second opening (6) being in fluid communication with the first cavity (3);
- a movable part (12) connected to the main body (2); and
- an electrically conductive element arranged in the movable part (12);
wherein the movable part (12) is configured to move between a first contact position in which the electrically conductive element is in contact with the working electrode (11) when the working electrode (11) is housed in the second cavity (4) and a second non-contact position between the electrically conductive element and the working electrode (11).

2. The electrochemical cell (1) according to the preceding claim, wherein the material of the main body (2) and/or of the movable part (12) is one of the following:
• an epoxy resin,
• polyurethane resin,
• a mixture of polycarbonate and a biodegradable thermoplastic compound,
• high-density polyethylene,
• polypropylene,
• vinyl polychloride,
• low-density polyethylene,
• polylactic acid,
• acrylonitrile-butadiene-styrene,
• polyethylene terephthalate with glycol,
• thermoplastic polyurethane,
• polyether ether ketone,
• carbon fibre-filled filaments,
• any combination thereof.

3. The electrochemical cell (1) according to any of the preceding claims, wherein the electrically conductive element comprises an electrically conductive material selected from the following: titanium, stainless steel, aluminium, copper, nickel, gold, silver, bronze, brass, glassy carbon, or graphite.

4. The electrochemical cell (1) according to any of the preceding claims, wherein the electrically conductive element comprises a sheet (13) and/or a spring (21).

5. The electrochemical cell (1) according to any of the preceding claims, wherein the movable part (12) is configured to transition from the first contact position to the second non-contact position through a rotational movement of the movable part (12) with respect to the main body (2).

6. The electrochemical cell (1) according to the preceding claim, wherein the movable part (12) is connected to the main body (2) by means of a pin (14).

7. The electrochemical cell (1) according to any of claims 1 to 4, wherein the movable part (12) is configured to transition from the first contact position to the second non-contact position through a displacement of the movable part (12) with respect to the main body (2).

8. The electrochemical cell (1) according to any of the preceding claims, wherein the main body (2) comprises:
an opening (15) facing the second cavity (4) and configured to house an illumination source, and
a transparent window separating the second cavity (4) from the opening (15).

9. The electrochemical cell (1) according to the preceding claim, wherein the illumination source is a LED, a mercury lamp, a xenon lamp, a fluorescent bulb, or any combination thereof.

10. The electrochemical cell (1) according to any of the preceding claims, wherein the first cavity (3) is open towards the outside of the main body (2), wherein in the first contact position the movable part (12) covers the first cavity (3) and in the second non-contact position access to the first cavity (3) is allowed.

11. The electrochemical cell (1) according to any of the preceding claims, wherein the main body (2) comprises two conduits (16) configured to allow the entry and exit of electrolyte with respect to the first cavity (3), respectively.

12. The electrochemical cell (1) according to any of the preceding claims, wherein the main body (2) and/or the movable part (12) are manufactured by means of a 3D printing process.

13. A platform for performing a plurality of electrochemical experiments simultaneously, the platform comprising:
- a plurality of electrochemical cells (1) according to any of claims 1 to 12, wherein for each electrochemical cell (1) there is a reference electrode (8) in the first opening (5) and a counter electrode (9) in the second opening (6);
- data acquisition means, wherein the data acquisition means comprise at least one sensor configured to detect at least one parameter of the experiment; and
- control means configured to control at least one parameter of the experiment.

14. The platform according to the preceding claim, further comprising an automated robotic system configured to perform one or more of the following actions:
- manipulating the plurality of electrochemical cells (1), and/or
- at least partially introducing a working electrode (11) in each electrochemical cell (1) to be actuated, and/or
- introducing an electrolyte in each electrochemical cell (1) to be actuated.

15. A method for training a machine learning algorithm for the characterisation of working electrodes (11), wherein the method comprises:
a) performing a plurality of electrochemical experiments in a plurality of electrochemical cells (1) of a platform according to any of claims 13 to 14, wherein each electrochemical cell (1) includes a working electrode (11), wherein the experiments are performed in experimental conditions defined by at least one parameter of the experiment, and wherein the experiments are performed:
- for working electrodes (11) that differ from one another in at least one initial property, and/or
- in experimental conditions that differ from one another;
b) obtaining at least one parameter of the experiment of each electrochemical cell (1) by means of the at least one sensor of the data acquisition means;
c) measuring, for each electrochemical cell (1) after performing the electrochemical experiment, at least one final property of the working electrode (11); and
d) training a machine learning algorithm with training data which comprises: at least one initial property of the working electrode (11), the at least one parameter of the experiment obtained, and the at least one final property of the working electrode (11) obtained in step c).
